# EUROPEAN PATENT APPLICATION

(11) **EP 4 807 661 A1**
(43) Date of publication of application: **16.09.2026**
(21) Application number: 25186687.7
(22) Date of filing: 01.07.2025
(51) Int. Cl.: G06T 3/4038

(54) **CHASSIS IMAGE GENERATION METHOD, APPARATUS AND DEVICE**

(30) Priority: 10.03.2025 CN 202510276810
(71) Applicant: ECARX TECHNOLOGY PTE. LTD., Singapore 048580 (SG)
(72) Inventor: WU, Guoben, Wuhan, Hubei, 430056 (CN); ZHANG, Min, Wuhan, Hubei, 430056 (CN)
(74) Representative: Santarelli

(57) **Abstract**

The present application provides a chassis image generation method and apparatus and a device, the method including: receiving target vehicle driving information, where the target vehicle driving information is obtained by aligning timestamps of items of information in vehicle driving information, and the timestamps are used to record acquisition times of the items of information; determining a speed, an acceleration and a target timestamp from the target vehicle driving information, where the target timestamp is a timestamp of the speed and the acceleration; determining a vehicle speed at a current moment according to the speed and the acceleration, where the current moment is a future moment relative to the target timestamp; and determining a panoramic image of the vehicle at the current moment according to the vehicle speed at the current moment and other information in the target vehicle driving information except the speed and the acceleration.

## Description

### TECHNICAL FIELD

The present application relates to the field of vehicle technology, and in particular to a chassis image generation method, apparatus and device.

### BACKGROUND

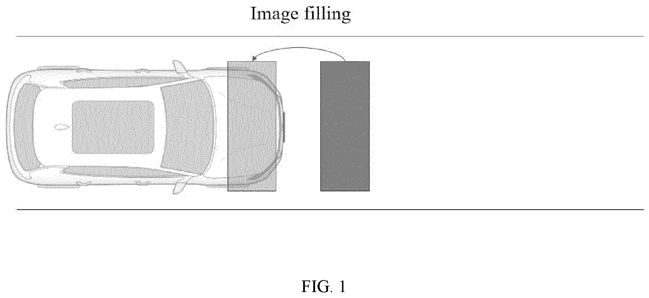

Panoramic image transparent chassis function mainly relies on multiple surround-view high-definition cameras on a vehicle to obtain image information of the road surface around the vehicle in real time. After being processed by an algorithm, these images will be filled under a vehicle model in a panoramic image function, realizing the visualization of a blind area under the chassis and allowing the driver to intuitively see the situation under the vehicle chassis. As shown in FIG. 1, during the movement of the vehicle, a transparent chassis algorithm needs to cut out an image in front of or behind the vehicle according to the vehicle's movement speed and direction angle in real time for filling.

360-degree panoramic imaging uses four surround-view cameras around the vehicle to capture real-time images, which are then stitched together into 360-degree images of the real environment through software technology to help car owners observe the environment around the vehicle. At present, 360-degree panoramic imaging technology has been widely used, and many automobile manufacturers have taken it as standard or optional equipment. With the continuous development of technology, 360-degree panoramic imaging technology is also constantly upgrading and improving, such as improving image quality and adding functions.

At the same time, the 360-degree panoramic imaging will also provide a transparent chassis function, which fills the area under of the car model with surrounding images captured by the surround-view cameras to achieve a perspective effect.

Most transparent chassis algorithm designs on the market use vehicle speed signals or wheel speed signals as input for the vehicle's longitudinal speed. The steering wheel angular velocity is converted into the steered wheel angle through the transmission ratio data of the vehicle design as the input for the vehicle's lateral movement. The signal is transmitted through the bus and transmitted inside the controller, which will cause a certain communication delay. At the same time, because the chassis controller has a filtering strategy for the vehicle speed signal at low speeds, when the vehicle speed is lower than a certain value, the speed value sent out is 0 km/h. Due to the wheel speed calculation model, the increase of the wheel speed value from 0 when accelerating from a standstill and its return to 0 when braking lag behind the actual vehicle movement. As a result, the speed value received by the transparent chassis is inconsistent with the actual movement status of the vehicle, and there is a misalignment between the filling image and the environmental image in the visual effect, which leads to an unpleasant experience for the driver.

### SUMMARY

In view of this, embodiments of the present application provide a chassis image generation method and apparatus and a device to overcome the above problem or at least partially solve the above problem.

In a first aspect, an embodiment of the present application provides a method for generating a chassis image, where the method includes:
receiving target vehicle driving information, where the target vehicle driving information is obtained by aligning timestamps of items of information in vehicle driving information, where the timestamps are used to record acquisition times of the items of information;
determining a speed, an acceleration and a target timestamp from the target vehicle driving information, where the target timestamp is a timestamp of the speed and the acceleration;
determining a vehicle speed at a current moment according to the speed and the acceleration, where the current moment is a future moment relative to the target timestamp; and
determining a panoramic image of the vehicle at the current moment according to the vehicle speed at the current moment and other information in the target vehicle driving information except the speed and the acceleration.

Optionally, in a case that the vehicle is driving on a flat surface, the speed includes: a wheel speed of a left rear wheel and a wheel speed of a right rear wheel of the vehicle at the target timestamp; the acceleration includes: a longitudinal acceleration and a lateral acceleration of the vehicle; and the determining the vehicle speed at the current moment according to the speed and the acceleration includes:
determining a communication delay according to the target timestamp and the current moment; and
determining the vehicle speed at the current moment according to the wheel speed of the left rear wheel and the wheel speed of the right rear wheel at the target timestamp, the longitudinal acceleration and the lateral acceleration of the vehicle, and the communication delay.

Optionally, the other information includes at least: images of the vehicle, a steering wheel angle, and vehicle body parameters; the determining the panoramic image of the vehicle at the current moment according to the vehicle speed at the current moment and other information in the target vehicle driving information except the speed and the acceleration includes:
determining the images of the vehicle, the steering wheel angle, and the vehicle body parameters from the target vehicle driving information; and
determining the panoramic image of the vehicle at the current moment according to the images of the vehicle, the steering wheel angle, the vehicle body parameters, and the vehicle speed at the current moment.

Optionally, determining the panoramic image of the vehicle at the current moment according to the images of the vehicle, the steering wheel angle, the vehicle body parameters, and the vehicle speed at the current moment includes:
determining a position and an attitude of the vehicle at the current moment, and a filling image under a chassis of the vehicle according to the images of the vehicle, the steering wheel angle, the vehicle body parameters and the vehicle speed at the current moment;
stitching the filling image under the chassis of the vehicle to an environmental image of the vehicle at the current moment based on the position and the attitude of the vehicle at the current moment; and
correcting a position and a size of the filling image fused into the environmental image to obtain the panoramic image.

Optionally, in a case that the vehicle is driving on a slope, the speed includes: a wheel speed of a left rear wheel and a wheel speed of a right rear wheel of the vehicle at the target timestamp; the acceleration includes: a longitudinal acceleration, a lateral acceleration and a vertical acceleration of the vehicle; and determining the vehicle speed at the current moment according to the speed and the acceleration includes:
determining a communication delay according to the target timestamp and the current moment; and
determining the vehicle speed at the current moment according to the wheel speed of the left rear wheel and the wheel speed of the right rear wheel at the target timestamp, the longitudinal acceleration, the lateral acceleration and the vertical acceleration of the vehicle, and the communication delay.

Optionally, the other information includes at least: images of the vehicle, and a steering wheel angle, vehicle body parameters, and slope information; the determining the panoramic image of the vehicle at the current moment according to the vehicle speed at the current moment and other information in the target vehicle driving information except the speed and the acceleration includes:
determining the images of the vehicle, the steering wheel angle, the vehicle body parameters and the slope information from the target vehicle driving information; and
determining the panoramic image of the vehicle at the current moment according to the images of the vehicle, the steering wheel angle, the vehicle body parameters, the slope information, and the vehicle speed at the current moment.

Optionally, the method further includes:
generating the panoramic image of the vehicle at the current moment in response to an image acquisition request of a user;
displaying the panoramic image of the vehicle at the current moment to the user.

Optionally, signal acquisition periods of the speed, the acceleration and the steering wheel angle in the items of information are not greater than a preset signal period, and an acquisition frame rate of the images in the items of information is greater than a preset frame rate;
the method further includes: determining whether the communication delay of the target vehicle driving information is less than the preset delay threshold after determining the communication delay; and
determining the vehicle speed at the current moment according to the speed and the acceleration after determining that the communication delay is less than the preset delay threshold, where the preset delay threshold is determined based on a real-time communication bandwidth.

In a second aspect, an embodiment of the present application provides a chassis image generation apparatus, the apparatus including:
a receiving module, configured to receive target vehicle driving information, where the target vehicle driving information is obtained by aligning timestamps of items of information in vehicle driving information, and the timestamps are used to record acquisition times of the items of information;
an information determining module, configured to determine a speed, an acceleration and a target timestamp from the target vehicle driving information, where the target timestamp is a timestamp of the speed and the acceleration;
a vehicle-speed determining module, configured to determine a vehicle speed at a current moment according to the speed and the acceleration, where the current moment is a future moment relative to the target timestamp; and
a panoramic-image generating module, configured to determine a panoramic image of the vehicle at the current moment according to the vehicle speed at the current moment and other information in the target vehicle driving information except the speed and the acceleration.

In a third aspect, an embodiment of the present application provides an electronic device, including a memory, a processor, and a computer program stored on the memory, where the processor executes the computer program to implement the method according to the first aspect.

In a fourth aspect, an embodiment of the present application provides a computer program product, including a computer program, and when the computer program is executed by a processor, the method according to the first aspect is implemented.

In a fifth aspect, an embodiment of the present application provides a computer-readable storage medium, on which a computer program is stored, where, when the computer program is executed by a processor, the method according to the first aspect is implemented.

### Beneficial effects of the application:

The embodiments of the present application provide a chassis image generation method and apparatus and a device, including: receiving target vehicle driving information, where the target vehicle driving information is obtained by aligning timestamps of items of information in vehicle driving information, and the timestamps are used to record acquisition times of the items of information; determining a speed, an acceleration and a target timestamp from the target vehicle driving information, where the target timestamp is a timestamp of the speed and the acceleration; determining a vehicle speed at a current moment according to the speed and the acceleration, where the current moment is a future moment relative to the target timestamp; determining a panoramic image of the vehicle at the current moment according to the vehicle speed at the current moment and other information in the target vehicle driving information except the speed and the acceleration.

Through the technical solution of the present application, the time consistency of various items of information in the vehicle driving information can be ensured through timestamp alignment, which facilitates data processing and analysis. Due to communication delay, the vehicle speed obtained from the target vehicle driving information is not a real-time vehicle speed (i.e., the speed at the current moment). Therefore, the solution uses the speed and the acceleration of the vehicle, in combination with the target timestamp, to accurately predict the vehicle speed at the current moment, i.e., the real-time vehicle speed, achieving calibration of the speed at the target timestamp, and further solving the problem of inaccurate vehicle speed caused by the communication delay resulting from the transmission of the target vehicle driving information and the filtering of the speed by the chassis controller. Then, through the calibrated current speed and other information, a panoramic image matching the current state of the vehicle is generated in time, thereby avoiding misalignment between the image of the area under the chassis and the environmental image in the panoramic image, improving the user's driving experience and enhancing driving safety.

### BRIEF DESCRIPTION OF DRAWINGS

The drawings constituting a part of the present application are used to provide a further understanding of the present application. The illustrative embodiments of the present application and their descriptions are used to explain the present application and do not constitute an improper limitation on the present application.

In order to more clearly illustrate the technical solution of the present application, the drawings required for use in the description of the present application will be briefly introduced below. Obviously, the drawings described below are only some embodiments of the present application. For persons skilled in the art, other drawings can be obtained based on these drawings without creative effort.
FIG. 1 is a schematic diagram of transparent chassis filling in related art.
FIG. 2 is an overall framework diagram of a chassis image generation method according to an embodiment of the present application.
FIG. 3 is a schematic flow chart of a chassis image generation method according to an embodiment of the present application.
FIG. 4 is a schematic diagram of aligning timestamps of vehicle driving information according to an embodiment of the present application.
FIG. 5 is a schematic diagram of using acceleration to perform speed compensation according to an embodiment of the present application.
FIG. 6 is a schematic diagram of a framework of a chassis image generation apparatus according to an embodiment of the present application.
FIG. 7 is a schematic diagram of an electronic device provided in an embodiment of the present application.

### DESCRIPTION OF EMBODIMENTS

It should be noted that, in the absence of conflict, the embodiments and features in the embodiments of the present application may be combined with each other.

The technical solutions in the embodiments of the present application will be clearly and completely described below in conjunction with the drawings in the embodiments of the present application. Obviously, the described embodiments are only some embodiments of the present application, rather than all of the embodiments. Based on the embodiments in the present application, all other embodiments obtained by persons skilled in the art without creative effort shall fall within the scope of protection of the present application.

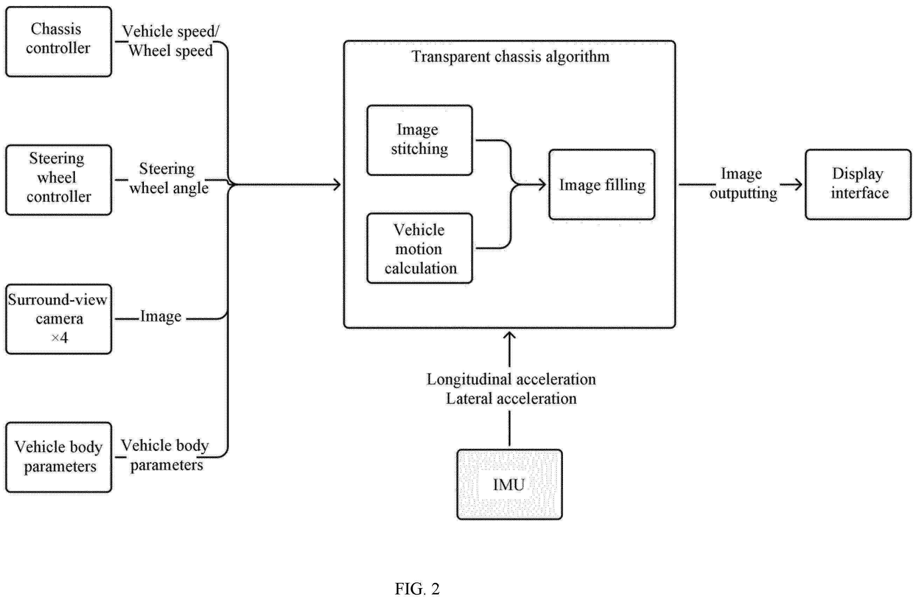

FIG. 2 is an overall framework diagram of a chassis image generation method according to an embodiment of the present application. As shown in FIG. 2, the technical solution of the present application mainly performs timestamp alignment on various items of information (such as a speed (vehicle speed/wheel speed), a steering wheel angle, images, and vehicle body parameters) during vehicle driving, combines the lateral and longitudinal accelerations provided by an inertial sensor, and combines the communication delay to perform speed compensation on the acquired speed, that is, vehicle motion calculation, to obtain the vehicle speed at the current moment and generate an accurate chassis filling image corresponding to the vehicle speed at the current moment. The filling image is stitched and filled with the environmental image to generate a panoramic image of the vehicle and output the image of the panoramic image, and the panoramic image is displayed on a display interface of the vehicle, so that the chassis filling image in the panoramic image seen by the user does not have any misalignment.

The present application will be described in detail below with reference to the accompanying drawings and in combination with embodiments.

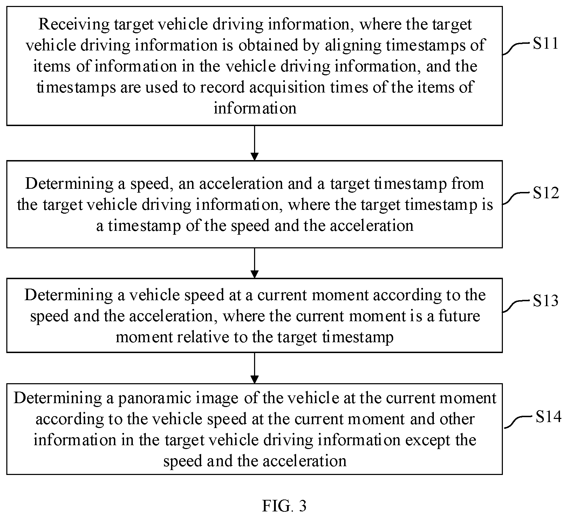

Referring to FIG. 3, which is a schematic flow chart of a chassis image generation method according to an embodiment of the present application. As shown in FIG. 3, a chassis image generation method provided in an embodiment of the present application includes steps S11 to S14.

Step S11: receiving target vehicle driving information, where the target vehicle driving information is obtained by aligning timestamps of items of information in the vehicle driving information, and the timestamps are used to record acquisition times of the items of information.

In this embodiment, a cockpit controller first receives driving information about the vehicle, namely, vehicle driving information. The vehicle driving information refers to various items of information generated by the vehicle during the driving process, such as a speed, an acceleration, images, vehicle body parameters, a steering wheel angle, etc.

Various items of information are obtained by different sensors or calculated by different controllers, for example, the speed (vehicle speed/wheel speed) is collected by a chassis controller, the steering wheel angle is collected by a steering wheel controller, the images are collected by multiple surround-view cameras, and the acceleration is collected by an inertial sensor (IMU, Inertial Measurement Unit).

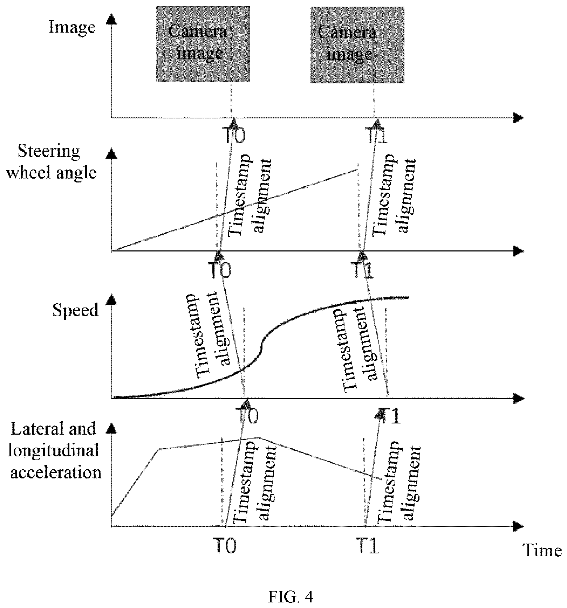

The present application takes into account that the acquisition frequencies and/or acquisition times of various items of information are different. Therefore, when collecting each item of information, FIG. 4 is a schematic diagram of aligning timestamps of vehicle driving information according to an embodiment of the present application. As shown in FIG. 4, in order to facilitate the time alignment of various items of information, the acquisition time of each item of information, that is, the timestamp (such as T0 and T1 in FIG. 4), will be recorded, and the value of each item of information will be stored according to the corresponding timestamp. After the timestamp alignment of each item of information in the vehicle driving information is performed, the time synchronization of each item of information can be guaranteed, and the target vehicle driving information can be obtained. Then, the chassis controller sends the target vehicle driving information to the cockpit controller.

Step S12: determining a speed, an acceleration and a target timestamp from the target vehicle driving information, where the target timestamp is a timestamp of the speed and the acceleration.

In this embodiment, after receiving the target vehicle driving information, the cockpit controller determines the speed and the acceleration, and the timestamp corresponding to the speed and the acceleration, which serves as the target timestamp.

Step S13: determining a vehicle speed at a current moment according to the speed and the acceleration, where the current moment is a future moment relative to the target timestamp.

In this embodiment, the determined speed and acceleration are used to calculate the vehicle speed at the current moment, which is the calibrated vehicle speed of the vehicle at the current moment, and the "current moment" refers to a certain moment in the future relative to the target timestamp.

Step S14: determining a panoramic image of the vehicle at the current moment according to the vehicle speed at the current moment and other information in the target vehicle driving information except the speed and the acceleration.

In this embodiment, the predicted current vehicle speed and other vehicle driving information except the speed and the acceleration in the target vehicle driving information (such as images, a steering wheel angle, vehicle body parameters, etc.) are used, and image processing techniques, such as image stitching and perspective correction, are used to comprehensively determine the panoramic image of the vehicle at the current moment. The panoramic image includes the image of the area under the chassis.

Through the technical solution of the present application, the time consistency of various items of information in the vehicle driving information can be ensured through timestamp alignment, which facilitates data processing and analysis. Due to communication delay, the vehicle speed obtained from the target vehicle driving information is not a real-time vehicle speed (i.e., the speed at the current moment). Therefore, the solution uses the vehicle speed and acceleration, in combination with the target timestamp, to accurately predict the speed at the current moment, i.e., the real-time vehicle speed, achieving calibration of the speed at the target timestamp and further solving the problem of inaccurate vehicle speed caused by the communication delay resulting from the transmission of the target vehicle driving information and the filtering of the speed by the chassis controller. Then, through the calibrated current speed and other information, a panoramic image matching the current state of the vehicle is generated in time, thereby avoiding misalignment between the image of the area under the chassis and the environmental image in the panoramic image, improving the user's driving experience and enhancing driving safety.

In combination with the above embodiment, in an implementation, the embodiment of the present application also provides a chassis image generation method. Specifically, in the method of this embodiment, in a case that the vehicle is driving on a flat surface, the speed includes: a wheel speed of a left rear wheel and a wheel speed of a right rear wheel of the vehicle at the target timestamp; the acceleration includes: a longitudinal acceleration and a lateral acceleration of the vehicle; the "determine the vehicle speed at the current moment according to the speed and the acceleration" in step S13 specifically includes step S13-1 and step S13-2.

Step S13-1: determining a communication delay according to the target timestamp and the current moment.

In this embodiment, in a case that the vehicle is driving on a flat surface, in actual application, there is a certain communication delay from when the chassis controller receives the target vehicle driving information to when the target vehicle driving information is processed. Therefore, the communication delay from the target timestamp to the current moment can be calculated to ensure the accuracy of the vehicle speed at the current moment.

Step S13-2: determining the vehicle speed at the current moment according to the wheel speed of the left rear wheel and the wheel speed of the right rear wheel at the target timestamp, the longitudinal acceleration and the lateral acceleration of the vehicle, and the communication delay.

In this embodiment, after the communication delay is determined, speed compensation is performed by combining the wheel speeds of the left and right rear wheels of the vehicle, the longitudinal and lateral accelerations, and the communication delay to obtain an accurately calculated vehicle speed at the current moment.

Optionally, the speed is the wheel speeds of two driven wheels (i.e., the left rear wheel and the right rear wheel) of the vehicle, which is calculated by arithmetic mean and used as the speed at the target timestamp.

The algorithm formula for the vehicle speed at the current moment (i.e. speed compensation) is: ${V}_{i 1} = \left({V}_{wLR 0}+{V}_{wRR 0}\right) / 2 \pm \sqrt{\pm {a}_{lg 0}^{2} \pm {a}_{lat 0}^{2}} Δt ;$
where, *V*_{*i*1}: the vehicle speed at the current moment, which is used as the speed input for generating the panoramic image;
*V*_{*wLR*0}: the wheel speed of the left rear wheel at the target timestamp;
*V*_{*wRR*0}: the wheel speed of the right rear wheel at the target timestamp;
*a*_{*lg*0}: the longitudinal acceleration at the target timestamp;
*a*_{*lat*0}: the lateral acceleration at the target timestamp;
*Δt*: the communication delay.

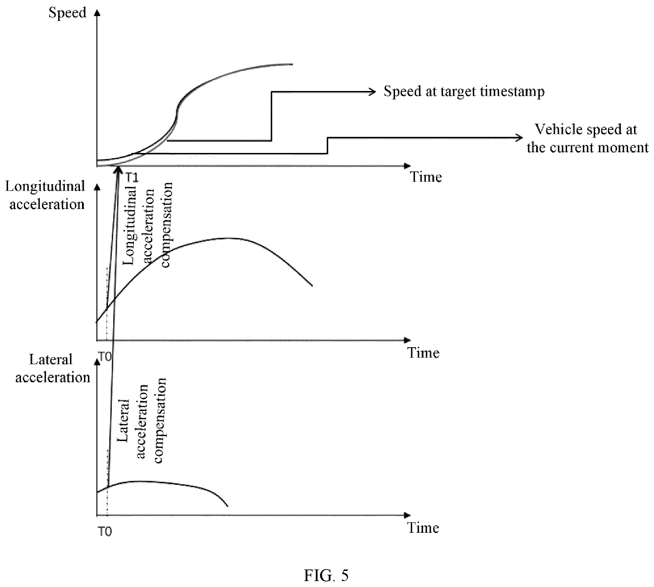

FIG. 5 is a schematic diagram of using acceleration to perform speed compensation according to an embodiment of the present application. As shown in FIG. 5, the above-mentioned speed compensation algorithm formula is used to calculate the vehicle speed *V*_{*i*1} at the current moment after the communication delay, the vehicle speed *V*_{*i*1} serving as the speed input for generating the panoramic image at the current moment. As a result, when the vehicle is moving, after time synchronization alignment and compensation of lateral and longitudinal accelerations, the speed input of the panoramic image is relatively more real-time and accurate, ensuring the accuracy of the filling image of the transparent chassis. The filling image of the transparent chassis can be aligned with the real environmental image to achieve the desired effect.

In FIG. 5, T0 represents the time corresponding to the target timestamp, and T1 represents the current moment. The speed at the target timestamp is compensated for by the acceleration (lateral acceleration and longitudinal acceleration) at the target timestamp to obtain the vehicle speed at the current moment.

The situation on a slope is similar, and speed compensation can be performed in combination with vertical acceleration, which will not be elaborated here.

Through the technical solution illustrated in this embodiment, the wheel speeds of the left rear wheel and the right rear wheel and the longitudinal and lateral accelerations of the vehicle can be considered, and combined with the communication delay, to predict the vehicle speed at the current moment more accurately. Accurate vehicle speed prediction helps to avoid the misalignment between the image of the chassis area of the vehicle and the actual environment caused by inaccurate speed estimation due to the communication delay and the speed filtering, thereby improving the alignment accuracy between the panoramic image and the environmental image. The user can get a clearer view of the bottom and surroundings of the vehicle through accurate panoramic images, especially when driving at low speeds and in complex road conditions, helping the user accurately avoid obstacles under the chassis, thereby improving driving safety.

In combination with the above embodiments, in an implementation, the embodiment of the present application also provides a chassis image generation method. Specifically, in the method of this embodiment, the other information includes at least: images of the vehicle, a steering wheel angle, and vehicle body parameters; the "determining the panoramic image of the vehicle at the current moment according to the vehicle speed at the current moment and other information in the target vehicle driving information except the speed and the acceleration" in step S14 specifically includes step S14-1 and step S14-2.

Step S14-1: determining the images of the vehicle, the steering wheel angle, and the vehicle body parameters from the target vehicle driving information.

In this embodiment, the images refer to image data of the road surface and the surrounding environment of the vehicle acquired in real time by multiple surround-view cameras around the vehicle. The steering wheel angle refers to a rotation angle of the steering wheel, which reflects a steering state of the vehicle. The vehicle body parameters refer to parameters such as vehicle size and position, which are crucial for correctly generating and positioning the panoramic images. In this process, the images of the vehicle, the steering wheel angle, and the vehicle body parameters are extracted from the target vehicle driving information.

Step S14-2: determining the panoramic image of the vehicle at the current moment according to the images of the vehicle, the steering wheel angle, the vehicle body parameters, and the vehicle speed at the current moment.

In this embodiment, by considering the images of the vehicle, the steering wheel angle, the vehicle body parameters and the vehicle speed at the current moment comprehensively, and applying image processing and computer vision techniques, such as image stitching and perspective correction, the panoramic image of the vehicle at the current moment is determined, enabling the user to get a complete view of the surroundings of the vehicle.

Through the technical solution illustrated in this embodiment, the vehicle speed, the steering wheel angle and the vehicle body parameters can be combined to more accurately determine the position and attitude of the vehicle, thereby generating a more accurate panoramic image and reducing image misalignment. Accurate vehicle speed and steering wheel angle data help ensure that the image under the chassis is correctly aligned with the actual environmental image, solving the misalignment problem caused by vehicle movement, thereby improving the accuracy and real-time performance of panoramic image generation, thereby improving driving safety and experience.

In combination with the above embodiments, in an implementation, the embodiment of the present application also provides a chassis image generation method. Specifically, in the method of this embodiment, the "determining the panoramic image of the vehicle at the current moment according to the images of the vehicle, the steering wheel angle, the vehicle body parameters, and the vehicle speed at the current moment" in step S14-2 specifically includes steps S14-2-1 to S14-2-3.

Step S14-2-1: determining a position and an attitude of the vehicle at the current moment, and a filling image under a chassis of the vehicle according to the images of the vehicle, the steering wheel angle, the vehicle body parameters and the vehicle speed at the current moment.

In this embodiment, the images of the vehicle, the steering wheel angle, the vehicle body parameters (such as vehicle size, wheelbase, etc.) and the vehicle speed at the current moment are used to determine complete information about the position, the direction and the motion state of the vehicle in space, and then calculate the precise position (i.e., the vehicle's coordinates in the global coordinate system) and the attitude (i.e., the vehicle's orientation, usually expressed as the angle between the vehicle and due north) of the vehicle in the environmental space. Accurate vehicle position and attitude calculation helps reduce the misalignment issue of the filling image of the chassis caused by vehicle motion or steering, especially during low-speed driving and turning.

After determining the position and attitude of the vehicle, the filling image under the vehicle chassis is generated. The filling image is a part of the panoramic image and is a view under the vehicle chassis at the current moment, thereby ensuring that the filling image matches the actual position and environment of the vehicle.

Step S14-2-2: stitching the filling image under the chassis of the vehicle to an environmental image of the vehicle at the current moment based on the position and the attitude of the vehicle at the current moment.

In this embodiment, after the precise position and attitude of the vehicle are determined, the filling image under chassis (i.e., the view under the vehicle chassis) can be stitched with the environmental image around the vehicle (i.e., the 360-degree view around the vehicle) to obtain a filling image that is fused into the environmental image, where the environmental image around the vehicle can be obtained according to the images acquired by the vehicle at the current moment.

Step S14-2-3: correcting a position and a size of the filling image fused into the environmental image to obtain the panoramic image.

In this embodiment, after the filling image is stitched with the environmental image, position and size correction can be further performed on the filling image to ensure the accuracy and naturalness after the stitching of the filling image and the environmental image, and finally, the panoramic image is obtained.

Among them, position correction refers to adjusting a relative position between the filling image and the environmental image, so that the filling image is completely aligned with the corresponding part in the environmental image to avoid misalignment or overlap in the final panoramic image.

Size correction refers to adjusting the size of the filling image to match the actual size and perspective of the vehicle to avoid deformation or distortion of the final panoramic image.

Through the technical solution illustrated in this embodiment, the position and attitude of the vehicle at the current moment are accurately calculated based on various items of information, and the filling image under the chassis is updated in real time, which can ensure the accuracy and real-time performance of the panoramic image and solve the misalignment problem between the filling image and the environmental image. Furthermore, by correcting the position and the size of the filling image, it can be ensured that the filling image blends naturally with the environmental image, further enhancing the generation effect of the global image.

In combination with the above embodiments, in an implementation, the embodiment of the present application also provides a chassis image generation method. Specifically, in the method of this embodiment, in a case that the vehicle is driving on a slope, the speed includes: a wheel speed of a left rear wheel and a wheel speed of a right rear wheel of the vehicle at the target timestamp; the acceleration includes: a longitudinal acceleration, a lateral acceleration and a vertical acceleration of the vehicle; the "determining a vehicle speed at the current moment according to the speed and the acceleration" in step S13 specifically includes steps S13-3 to S13-4.

Step S13-3: determining a communication delay according to the target timestamp and the current moment.

In this embodiment, in a case that the vehicle is driving on a slope, reference is made to step S13-1 for the determination of the communication delay.

Step S13-4: determining the vehicle speed at the current moment according to the wheel speed of the left rear wheel and the wheel speed of the right rear wheel at the target timestamp, the longitudinal acceleration, the lateral acceleration and the vertical acceleration of the vehicle, and the communication delay.

In this embodiment, after the communication delay is determined, the vehicle speed at the current moment is accurately calculated by combining the wheel speeds of the left and right rear wheels of the vehicle, the longitudinal acceleration, the lateral acceleration, the vertical acceleration, and the communication delay.

Through the technical solution illustrated in this embodiment, in a case that the vehicle is driving on a slope, the wheel speeds of the left rear wheel and the right rear wheel and the longitudinal, lateral and vertical accelerations of the vehicle can be considered, and combined with the communication delay, to predict the vehicle speed at the current moment more accurately. Accurate vehicle speed prediction helps to avoid the misalignment between the image of the chassis area of the vehicle and the actual environment caused by inaccurate speed estimation due to the communication delay and the speed filtering, thereby improving the alignment accuracy between the panoramic image and the environmental image. The user can get a clearer view of the bottom and surroundings of the vehicle through accurate panoramic images, especially when driving at low speeds and in complex road conditions, helping the user accurately avoid obstacles under the chassis, thereby improving driving safety.

In combination with the above embodiments, in an implementation, the embodiment of the present application also provides a chassis image generation method. Specifically, in the method of this embodiment, the other information includes at least: images of the vehicle, a steering wheel angle, vehicle body parameters and slope information; the "determining the panoramic image of the vehicle at the current moment according to the vehicle speed at the current moment and other information in the target vehicle driving information except the speed and the acceleration" in step S14 specifically includes step S14-3 and step S14-4.

Step S14-3: determining the images of the vehicle, the steering wheel angle, the vehicle body parameters and the slope information from the target vehicle driving information.

In this embodiment, the images refer to image data of the road surface and the surrounding environment of the vehicle acquired in real time by multiple surround-view cameras around the vehicle. The steering wheel angle refers to a rotation angle of the steering wheel, which reflects the steering state of the vehicle. The vehicle body parameters refer to parameters such as vehicle size and position, which are crucial for the correct generation and positioning of panoramic images. The slope information refers to the slope information of the road on which the vehicle travels.

Step S 14-4: determining the panoramic image of the vehicle at the current moment according to the images of the vehicle, the steering wheel angle, the vehicle body parameters, the slope information, and the vehicle speed at the current moment.

In this embodiment, by considering the images of the vehicle, the steering wheel angle, the vehicle body parameters, the slope information and the vehicle speed at the current moment comprehensively, and applying image processing and computer vision techniques, such as image stitching and perspective correction, the panoramic image of the vehicle at the current moment is determined, so that the user can get a complete view of the surroundings of the vehicle.

Through the technical solution illustrated in this embodiment, the vehicle speed, the steering wheel angle, the vehicle body parameters and the slope information can be combined to more accurately determine the position and attitude of the vehicle, thereby generating a more accurate panoramic image and reducing image misalignment. Accurate vehicle speed and steering wheel angle data help ensure that the image under the chassis is correctly aligned with the actual environmental image, solving the misalignment problem caused by vehicle movement, thereby improving the accuracy and real-time performance of panoramic image generation, thereby improving driving safety and experience.

In combination with the above embodiments, in an implementation, the embodiment of the present application also provides a chassis image generation method. Specifically, in the method of this embodiment, the method also includes step S21 and step S22.

Step S21: generating the panoramic image of the vehicle at the current moment in response to an image acquisition request of a user.

In this embodiment, the user's request can be responded to. When the user issues an image acquisition request, the panoramic image at the current moment will be generated.

Step S22: displaying the panoramic image of the vehicle at the current moment to the user.

In this embodiment, after the panoramic image is generated, the panoramic image is displayed to the user through the vehicle's display system (such as a central control screen, a dashboard screen, etc.).

Through the technical solution illustrated in this embodiment, the function of real-time response to user requests can be provided, enhancing the user's interactive experience, enabling users to actively get the required panoramic image information. Moreover, users can obtain the panoramic image at any time as needed, which is especially useful in complex or limited-visibility driving environments and improves driving convenience.

In combination with the above embodiments, in an implementation, the embodiment of the present application also provides a chassis image generation method. Specifically, in the method of this embodiment, signal acquisition periods of the speed, the acceleration and the steering wheel angle in the items of information are not greater than a preset signal period, and an acquisition frame rate of the images in the items of information is greater than a preset frame rate;
the method further includes: determining whether the communication delay of the target vehicle driving information is less than the preset delay threshold after determining the communication delay;
determining the vehicle speed at the current moment according to the speed and the acceleration after determining that the communication delay is less than the preset delay threshold, where the preset delay threshold is determined based on a real-time communication bandwidth.

In this embodiment, since the acquisition time of each item of information may not be synchronized, in order to avoid the absence of corresponding images or acceleration information at the target timestamp, the acquisition frequency of each item of information can be restricted. Among them, the signal acquisition periods of the speed, the acceleration and the steering wheel angle in the items of information are not greater than the preset signal period; the acquisition frame rate of the images in the items of information is greater than the preset frame rate. The preset signal period and the preset frame rate can be adjusted according to the process of compensating for the speed in the generation of historical panoramic images.

Example:
1. The signal acquisition period of speed is ≤40ms;
2. The signal acquisition period of steering wheel angle is ≤40ms;
3. The acquisition frame rate of camera image is ≥ 25fps;
4. The signal acquisition period of lateral acceleration/longitudinal acceleration is ≤40ms.

In addition, in this embodiment, the communication delay is the sum of the vehicle's overall communication delay and the internal signal link delay of the cockpit controller. The communication delay can be calculated by the timestamp corresponding to the acquisition moment and the current moment when the panoramic image needs to be generated. Therefore, in order to reduce the impact of the communication delay of receiving the target vehicle driving information, the communication delay of the target vehicle driving information can be restricted based on the actual communication bandwidth. A reasonable delay upper limit, i.e., a preset delay threshold, can be set for the receiving of the target vehicle driving information according to the real-time communication bandwidth. The preset delay threshold changes dynamically with the currently available communication bandwidth, thereby ensuring the efficiency and response speed of the transmission of the target vehicle driving information, so as to meet the real-time requirement of vehicle control and panoramic image generation.

For example, in order to ensure that users can receive accurate global images without misalignment in a timely manner, during the reception process from the chassis controller to the cockpit controller, the preset delay threshold corresponding to the target vehicle driving information under the current communication bandwidth can be dynamically determined according to the communication bandwidth. A specific calculation method of the preset delay threshold is as follows: ${T}_{threshold} = min \left({T}_{max}, \frac{C}{B}\right) ;$
where, *T*_{threshold} is the preset delay threshold;
*T*ₘₐₓ is the maximum delay threshold, which is used to constrain the preset delay threshold not to exceed the maximum delay threshold;
*B* is the real-time communication bandwidth;
*C* is a constant, which is determined according to actual requirements and historical preset delay threshold data under the condition of the real-time communication bandwidth.

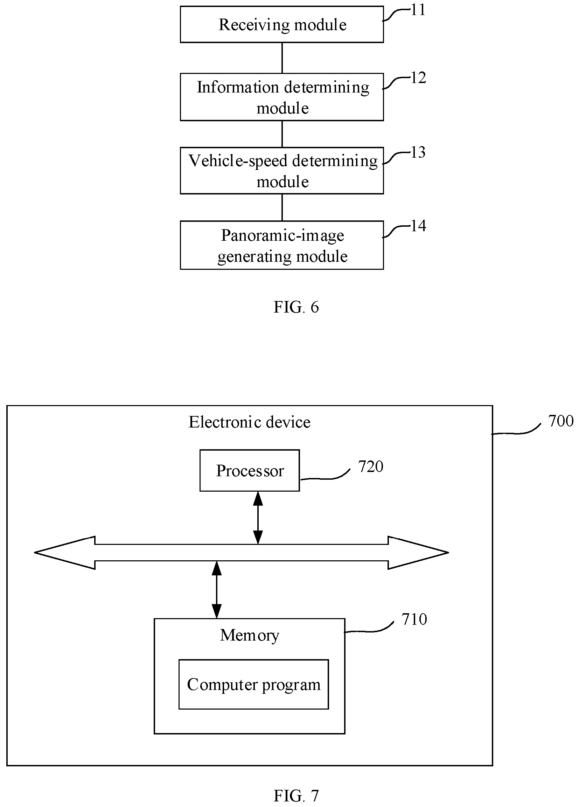

Based on the same inventive concept, another embodiment of the present application further provides a chassis image generating apparatus. FIG. 6 is a schematic diagram of a framework of a chassis image generation apparatus according to an embodiment of the present application. As shown in FIG. 6, the apparatus includes:
a receiving module 11, configured to receive target vehicle driving information, where the target vehicle driving information is obtained by aligning timestamps of items of information in vehicle driving information, and the timestamps are used to record acquisition times of the items of information;
an information determining module 12, configured to determine a speed, an acceleration and a target timestamp from the target vehicle driving information, where the target timestamp is a timestamp of the speed and the acceleration;
a vehicle-speed determining module 13, configured to determine a vehicle speed at a current moment according to the speed and the acceleration, where the current moment is a future moment relative to the target timestamp; and
a panoramic-image generating module 14, configured to determine a panoramic image of the vehicle at the current moment according to the vehicle speed at the current moment and other information in the target vehicle driving information except the speed and the acceleration.

Optionally, in a case that the vehicle is driving on a flat surface, the speed includes: a wheel speed of a left rear wheel and a wheel speed of a right rear wheel of the vehicle at the target timestamp; the acceleration includes: a longitudinal acceleration and a lateral acceleration of the vehicle; the vehicle-speed determining module 13 includes:
a first communication-delay determining unit, configured to determine a communication delay according to the target timestamp and the current moment; and
a first vehicle-speed determining unit, configured to determine the vehicle speed at the current moment according to the wheel speed of the left rear wheel and the wheel speed of the right rear wheel at the target timestamp, the longitudinal acceleration and the lateral acceleration of the vehicle, and the communication delay.

Optionally, the other information includes at least: images of the vehicle, a steering wheel angle, and vehicle body parameters; the panoramic-image generating module 14 includes:
a first determining unit, configured to determine the images of the vehicle, the steering wheel angle, and the vehicle body parameters from the target vehicle driving information; and
a first panoramic-image generating unit, configured to determine the panoramic image of the vehicle at the current moment according to the images of the vehicle, the steering wheel angle, the vehicle body parameters, and the vehicle speed at the current moment.

Optionally, the first panoramic-image generating unit includes:
a filling-image determining unit, configured to determine a position and an attitude of the vehicle at the current moment, and a filling image under a chassis of the vehicle according to the images of the vehicle, the steering wheel angle, the vehicle body parameters and the vehicle speed at the current moment;
a filling unit, configured to stitch the filling image under the chassis of the vehicle into an environmental image of the vehicle at the current moment based on the position and the attitude of the vehicle at the current moment; and
a correcting unit, configured to correct a position and a size of the filling image fused into the environmental image to obtain the panoramic image.

Optionally, in a case that the vehicle is driving on a slope, the speed includes: a wheel speed of a left rear wheel and a wheel speed of a right rear wheel of the vehicle at the target timestamp; the acceleration includes: a longitudinal acceleration, a lateral acceleration and a vertical acceleration of the vehicle; the vehicle-speed determining module 13 includes:
a second communication-delay determining unit, configured to determine a communication delay according to the target timestamp and the current moment; and
a second vehicle-speed determining unit, configured to determine the vehicle speed at the current moment according to the wheel speed of the left rear wheel and the wheel speed of the right rear wheel at the target timestamp, the longitudinal acceleration, the lateral acceleration and the vertical acceleration of the vehicle, and the communication delay.

Optionally, the other information includes at least: images of the vehicle, a steering wheel angle, vehicle body parameters and slope information; the panoramic-image generating module 14 includes:
a second determining unit, configured to determine the images of the vehicle, the steering wheel angle, the vehicle body parameters and the slope information from the target vehicle driving information; and
a second panoramic-image generating unit, configured to determine the panoramic image of the vehicle at the current moment according to the images of the vehicle, the steering wheel angle, the vehicle body parameters, the slope information, and the vehicle speed at the current moment.

Optionally, the apparatus further includes:
a generating module, configured to generate the panoramic image of the vehicle at the current moment in response to an image acquisition request of a user;
a displaying module, configured to display the panoramic image of the vehicle at the current moment to the user.

Optionally, signal acquisition periods of the speed, the acceleration and the steering wheel angle in the items of information are not greater than a preset signal period, and an acquisition frame rate of the images in the items of information is greater than a preset frame rate;
the apparatus further includes: a judging unit, configured to determine whether the communication delay of the target vehicle driving information is less than the preset delay threshold after the communication delay is determined; and
a third vehicle-speed determining unit, configured to determine the vehicle speed at the current moment according to the speed and the acceleration after it is determined that the communication delay is less than the preset delay threshold, where the preset delay threshold is determined based on to a real-time communication bandwidth.

Based on the same inventive concept, another embodiment of the present application further provides an electronic device, including a memory, a processor and a computer program stored on the memory, where the processor executes the computer program to implement the chassis image generation method according to any of the above embodiments.

Reference is made to FIG. 7 for the electronic device. FIG. 7 is a schematic diagram of an electronic device provided in an embodiment of the present application. As shown in FIG. 7, the electronic device 700 includes: a memory 710 and a processor 720. The memory 710 and the processor 720 are connected via a communication bus, and the memory 710 stores a computer program that can be run on the processor 720, thereby implementing the steps of the chassis image generation method disclosed in the above embodiments of the present application.

Based on the same inventive concept, another embodiment of the present application further provides a computer program product, including a computer program, and when the computer program is executed by a processor, the chassis image generation method described in any of the above embodiments is implemented.

Based on the same inventive concept, another embodiment of the present application further provides a computer-readable storage medium on which a computer program is stored, where, when the program is executed by a processor, the chassis image generation method as described in any of the above embodiments is implemented.

As for the apparatus, since it is basically similar to the method embodiment, the description is relatively simple, and for relevant parts, reference can be made to the partial description of the method embodiment.

The various embodiments in this specification are described in a progressive manner, and each embodiment focuses on the differences from other embodiments. The same or similar parts between the various embodiments can be referenced to each other.

Persons skilled in the art should understand that the embodiments of the present application may be provided as methods, apparatuses, or computer program products. Therefore, the embodiments of the present application may take the form of a completely hardware embodiment, a completely software embodiment, or an embodiment combining software and hardware. Moreover, the embodiments of the present application may take the form of a computer program product implemented on one or more computer-usable storage media (including but not limited to disk storage, CD-ROM, optical storage, etc.) containing computer-usable program codes.

The embodiments of the present application are described with reference to flowcharts and/or block diagrams of methods, terminal device (system), and computer program products according to the embodiments of the present application. It should be understood that each process and/or block in the flowchart and/or block diagram, and a combination of the processes and/or blocks in the flowchart and/or block diagram can be implemented by computer program instructions. These computer program instructions can be provided to a processor of a general-purpose computer, a special-purpose computer, an embedded processing machine or other programmable data processing terminal device to produce a machine, so that the instructions executed by the processor of the computer or other programmable data processing terminal device produce an apparatus for implementing the functions specified in one or more processes in the flowchart and/or one or more blocks in the block diagram.

These computer program instructions may also be stored in a computer-readable memory that can direct a computer or other programmable data processing terminal device to operate in a specific manner, so that the instructions stored in the computer-readable memory produce a manufactured product including an instruction apparatus that implements the functions specified in one or more processes in the flowchart and/or one or more blocks in the block diagram.

These computer program instructions can also be loaded onto a computer or other programmable data processing terminal device, so that a series of operating steps are executed on the computer or other programmable terminal device to produce computer-implemented processing, so that the instructions executed on the computer or other programmable terminal device provide steps for implementing the functions specified in one or more processes in the flowchart and/or one or more blocks in the block diagram.

Although preferred embodiments of the present application have been described, persons skilled in the art may make additional changes and modifications to these embodiments once they understand the basic creative concepts. Therefore, it is intended that the appended claims are interpreted as including the preferred embodiment as well as all changes and modifications that fall within the scope of the embodiments of the present application.

Finally, it should be noted that, in this article, relational terms such as first and second, etc. are merely used to distinguish one entity or operation from another entity or operation, and do not necessarily require or imply any actual relationship or order between these entities or operations. Moreover, the terms "comprise", "include", or any other variations thereof are intended to cover non-exclusive inclusion, such that a process, method, article, or terminal device that includes a series of elements includes not only those elements, but also other elements not explicitly listed, or also includes elements that are inherent to such process, method, article, or terminal device. Without further limitations, an element defined by the phrase "include a..." does not exclude the existence of additional identical elements in the process, method, article, or terminal device that includes the element.

The above is a detailed introduction to the chassis image generation method, apparatus and device provided by the present application. Specific examples are used herein to illustrate the principles and implementation methods of the present application. The description of the above embodiments is only used to help understand the method of the present application and its core idea; at the same time, for persons skilled in the art, according to the idea of the present application, there will be changes in the specific implementation method and application scope. In summary, the content of this specification should not be understood as a limitation on the present application.

## Claims

1. A chassis image generation method, wherein the method comprises:
receiving (S11) target vehicle driving information, wherein the target vehicle driving information is obtained by aligning timestamps of items of information in vehicle driving information, wherein the timestamps are used to record acquisition times of the items of information;
determining (S12) a speed, an acceleration, and a target timestamp from the target vehicle driving information, wherein the target timestamp is a timestamp of the speed and the acceleration;
determining (S13) a vehicle speed at a current moment according to the speed and the acceleration, wherein the current moment is a future moment relative to the target timestamp; and
determining (S14) a panoramic image of the vehicle at the current moment according to the vehicle speed at the current moment and other information in the target vehicle driving information except the speed and the acceleration.

2. The chassis image generation method according to claim 1, wherein in a case that the vehicle is driving on a flat surface, the speed comprises: a wheel speed of a left rear wheel and a wheel speed of a right rear wheel of the vehicle at the target timestamp; the acceleration comprises: a longitudinal acceleration and a lateral acceleration of the vehicle; and the determining the vehicle speed at the current moment according to the speed and the acceleration comprises:
determining a communication delay according to the target timestamp and the current moment; and
determining the vehicle speed at the current moment according to the wheel speed of the left rear wheel and the wheel speed of the right rear wheel at the target timestamp, the longitudinal acceleration and the lateral acceleration of the vehicle, and the communication delay.

3. The chassis image generation method according to claim 2, wherein the other information comprises at least: images of the vehicle, a steering wheel angle, and vehicle body parameters; wherein the determining the panoramic image of the vehicle at the current moment according to the vehicle speed at the current moment and other information in the target vehicle driving information except the speed and the acceleration comprises:
determining the images of the vehicle, the steering wheel angle, and the vehicle body parameters from the target vehicle driving information; and
determining the panoramic image of the vehicle at the current moment according to the images of the vehicle, the steering wheel angle, the vehicle body parameters, and the vehicle speed at the current moment.

4. The chassis image generation method according to claim 3, wherein the determining the panoramic image of the vehicle at the current moment according to the images of the vehicle, the steering wheel angle, the vehicle body parameters, and the vehicle speed at the current moment comprises:
determining a position and an attitude of the vehicle at the current moment, and a filling image under a chassis of the vehicle according to the images of the vehicle, the steering wheel angle, the vehicle body parameters and the vehicle speed at the current moment;
stitching the filling image under the chassis of the vehicle to an environmental image of the vehicle at the current moment based on the position and the attitude of the vehicle at the current moment; and
correcting a position and a size of the filling image fused into the environmental images to obtain the panoramic image.

5. The chassis image generation method according to claim 1, wherein in a case that the vehicle is driving on a slope, the speed comprises: a wheel speed of a left rear wheel and a wheel speed of a right rear wheel of the vehicle at the target timestamp; the acceleration comprises: a longitudinal acceleration, a lateral acceleration and a vertical acceleration of the vehicle; and the determining the vehicle speed at the current moment according to the speed and the acceleration comprises:
determining a communication delay according to the target timestamp and the current moment; and
determining the vehicle speed at the current moment according to the wheel speed of the left rear wheel and the wheel speed of the right rear wheel at the target timestamp, the longitudinal acceleration, the lateral acceleration and the vertical acceleration of the vehicle, and the communication delay.

6. The chassis image generation method according to claim 5, wherein the other information comprises at least: images of the vehicle, a steering wheel angle, vehicle body parameters, and slope information; the determining the panoramic image of the vehicle at the current moment according to the vehicle speed at the current moment and other information in the target vehicle driving information except the speed and the acceleration comprises:
determining the images of the vehicle, the steering wheel angle, the vehicle body parameters and the slope information from the target vehicle driving information; and
determining the panoramic image of the vehicle at the current moment according to the images of the vehicle, the steering wheel angle, the vehicle body parameters, the slope information, and the vehicle speed at the current moment.

7. The chassis image generation method according to any one of claims 1 to 6, wherein the method further comprises:
generating the panoramic image of the vehicle at the current moment in response to an image acquisition request of a user; and
displaying the panoramic image of the vehicle at the current moment to the user.

8. The chassis image generation method according to any one of claims 2 to 6, wherein signal acquisition periods of the speed, the acceleration and the steering wheel angle in the items of information are not greater than a preset signal period, and an acquisition frame rate of the images in the items of information is greater than a preset frame rate;
the method further comprises: determining whether the communication delay of the target vehicle driving information is less than a preset delay threshold after determining the communication delay;
determining the vehicle speed at the current moment according to the speed and the acceleration after determining that the communication delay is less than the preset delay threshold, wherein the preset delay threshold is determined based on a real-time communication bandwidth.

9. A chassis image generation apparatus, wherein the apparatus comprises:
a receiving module (11), configured to receive target vehicle driving information, wherein the target vehicle driving information is obtained by aligning timestamps of items of information in vehicle driving information, and the timestamps are used to record acquisition times of the items of information;
an information determining module (12), configured to determine a speed, an acceleration, and a target timestamp from the target vehicle driving information, wherein the target timestamp is a timestamp of the speed and the acceleration;
a vehicle-speed determining module (13), configured to determine a vehicle speed at a current moment according to the speed and the acceleration, wherein the current moment is a future moment relative to the target timestamp; and
a panoramic-image generating module (14), configured to determine a panoramic image of the vehicle at the current moment according to the vehicle speed at the current moment and other information in the target vehicle driving information except the speed and the acceleration.

10. The chassis image generation apparatus according to claim 9, wherein in a case that the vehicle is driving on a flat surface, the speed comprises: a wheel speed of a left rear wheel and a wheel speed of a right rear wheel of the vehicle at the target timestamp; the acceleration comprises: a longitudinal acceleration and a lateral acceleration of the vehicle; and the vehicle-speed determining module (13) comprises:
a first communication-delay determining unit, configured to determine a communication delay according to the target timestamp and the current moment; and
a first vehicle-speed determining unit, configured to determine the vehicle speed at the current moment according to the wheel speed of the left rear wheel and the wheel speed of the right rear wheel at the target timestamp, the longitudinal acceleration and the lateral acceleration of the vehicle, and the communication delay.

11. The chassis image generation apparatus according to claim 10, wherein the other information comprises at least: images of the vehicle, a steering wheel angle, and vehicle body parameters; and the panoramic-image generating module (14) comprises:
a first determining unit, configured to determine the images of the vehicle, the steering wheel angle, and the vehicle body parameters from the target vehicle driving information; and
a first panoramic-image generating unit, configured to determine the panoramic image of the vehicle at the current moment according to the images of the vehicle, the steering wheel angle, the vehicle body parameters, and the vehicle speed at the current moment.

12. The chassis image generation apparatus according to claim 11, wherein the first panoramic-image generating unit comprises:
a filling-image determining unit, configured to determine a position and an attitude of the vehicle at the current moment, and a filling image under a chassis of the vehicle according to the images of the vehicle, the steering wheel angle, the vehicle body parameters and the vehicle speed at the current moment;
a filling unit, configured to stitch the filling image under the chassis of the vehicle into an environmental image of the vehicle at the current moment based on the position and the attitude of the vehicle at the current moment; and
a correcting unit, configured to correct a position and a size of the filling image fused into the environmental image to obtain the panoramic image.

13. The chassis image generation apparatus according to claim 9, wherein in a case that the vehicle is driving on a slope, the speed comprises: a wheel speed of a left rear wheel and a wheel speed of a right rear wheel of the vehicle at the target timestamp; the acceleration comprises: a longitudinal acceleration, a lateral acceleration and a vertical acceleration of the vehicle; and the vehicle-speed determining module (13) comprises:
a second communication-delay determining unit, configured to determine a communication delay according to the target timestamp and the current moment; and
a second vehicle-speed determining unit, configured to determine the vehicle speed at the current moment according to the wheel speed of the left rear wheel and the wheel speed of the right rear wheel at the target timestamp, the longitudinal acceleration, the lateral acceleration and the vertical acceleration of the vehicle, and the communication delay.

14. The chassis image generation apparatus according to claim 13, wherein the other information comprises at least: images of the vehicle, a steering wheel angle, vehicle body parameters and slope information; and the panoramic-image generating module (14) comprises:
a second determining unit, configured to determine the images of the vehicle, the steering wheel angle, the vehicle body parameters and the slope information from the target vehicle driving information; and
a second panoramic-image generating unit, configured to determine the panoramic image of the vehicle at the current moment according to the images of the vehicle, the steering wheel angle, the vehicle body parameters, the slope information, and the vehicle speed at the current moment.

15. An electronic device (700), comprising a memory (710), a processor (720) and a computer program stored on the memory (710), wherein the processor (720) executes the computer program to implement the chassis image generation method according to any one of claims 1 to 8.

## Amended claims

### Amended claims in accordance with Rule 137(2) EPC.

1. A chassis image generation method, wherein the method comprises:
receiving (S11) target vehicle driving information, wherein the target vehicle driving information is obtained by aligning timestamps of items of information in vehicle driving information, wherein the timestamps are used to record acquisition times of the items of information;
determining (S12) a speed, an acceleration, and a target timestamp from the target vehicle driving information, wherein the target timestamp is a timestamp of the speed and the acceleration;
determining (S13) a vehicle speed at a current moment according to the speed and the acceleration, wherein the current moment is a future moment relative to the target timestamp; wherein, an algorithm formula for the vehicle speed at the current moment is: ${V}_{i 1} = \left({V}_{wLR}+{V}_{wRR 0}\right) / 2 \pm \sqrt{\pm {a}_{lg 0}^{2} \pm {a}_{lat}^{2}} Δt ;$
wherein, Vᵢ₁ is the vehicle speed at the current moment, which is used as a speed input for generating a panoramic image;
*V*_{*wLR*0} is a wheel speed of a left rear wheel at the target timestamp;
*V*_{*wRR*0} is a wheel speed of a right rear wheel at the target timestamp;
*a*_{*lg*0} is a longitudinal acceleration at the target timestamp;
*a*_{*lat*0} is a lateral acceleration at the target timestamp;
*Δt* is a communication delay determined according to the target timestamp and the current moment;
determining (S14) a filling image under a chassis of the vehicle according to the vehicle speed at the current moment and other information in the target vehicle driving information except the speed and the acceleration; and
stitching the filling image to an environmental image of the vehicle at the current moment to determine the panoramic image of the vehicle at the current moment.

2. The chassis image generation method according to claim 1, wherein in a case that the vehicle is driving on a flat surface, the speed comprises: the wheel speed of the left rear wheel and the wheel speed of the right rear wheel of the vehicle at the target timestamp; the acceleration comprises: the longitudinal acceleration and the lateral acceleration of the vehicle; and the determining the vehicle speed at the current moment according to the speed and the acceleration comprises:
determining the communication delay according to the target timestamp and the current moment; and
determining the vehicle speed at the current moment according to the wheel speed of the left rear wheel and the wheel speed of the right rear wheel at the target timestamp, the longitudinal acceleration and the lateral acceleration of the vehicle, and the communication delay.

3. The chassis image generation method according to claim 2, wherein the other information comprises at least: images of the vehicle, a steering wheel angle, and vehicle body parameters; wherein the determining the panoramic image of the vehicle at the current moment according to the vehicle speed at the current moment and other information in the target vehicle driving information except the speed and the acceleration comprises:
determining the images of the vehicle, the steering wheel angle, and the vehicle body parameters from the target vehicle driving information; and
determining the panoramic image of the vehicle at the current moment according to the images of the vehicle, the steering wheel angle, the vehicle body parameters, and the vehicle speed at the current moment.

4. The chassis image generation method according to claim 3, wherein the determining the panoramic image of the vehicle at the current moment according to the images of the vehicle, the steering wheel angle, the vehicle body parameters, and the vehicle speed at the current moment comprises:
determining a position and an attitude of the vehicle at the current moment, and a filling image under a chassis of the vehicle according to the images of the vehicle, the steering wheel angle, the vehicle body parameters and the vehicle speed at the current moment;
stitching the filling image under the chassis of the vehicle to an environmental image of the vehicle at the current moment based on the position and the attitude of the vehicle at the current moment; and
correcting a position and a size of the filling image fused into the environmental image to obtain the panoramic image.

5. The chassis image generation method according to claim 1, wherein in a case that the vehicle is driving on a slope, the speed comprises: the wheel speed of the left rear wheel and the wheel speed of the right rear wheel of the vehicle at the target timestamp; the acceleration comprises: the longitudinal acceleration, the lateral acceleration and a vertical acceleration of the vehicle; and the determining the vehicle speed at the current moment according to the speed and the acceleration comprises:
determining the communication delay according to the target timestamp and the current moment; and
determining the vehicle speed at the current moment according to the wheel speed of the left rear wheel and the wheel speed of the right rear wheel at the target timestamp, the longitudinal acceleration, the lateral acceleration and the vertical acceleration of the vehicle, and the communication delay.

6. The chassis image generation method according to claim 5, wherein the other information comprises at least: images of the vehicle, a steering wheel angle, vehicle body parameters, and slope information; the determining the panoramic image of the vehicle at the current moment according to the vehicle speed at the current moment and other information in the target vehicle driving information except the speed and the acceleration comprises:
determining the images of the vehicle, the steering wheel angle, the vehicle body parameters and the slope information from the target vehicle driving information; and
determining the panoramic image of the vehicle at the current moment according to the images of the vehicle, the steering wheel angle, the vehicle body parameters, the slope information, and the vehicle speed at the current moment.

7. The chassis image generation method according to any one of claims 1 to 6, wherein the method further comprises:
generating the panoramic image of the vehicle at the current moment in response to an image acquisition request of a user; and
displaying the panoramic image of the vehicle at the current moment to the user.

8. The chassis image generation method according to any one of claims 2 to 6, wherein signal acquisition periods of the speed, the acceleration and the steering wheel angle in the items of information are not greater than a preset signal period, and an acquisition frame rate of the images in the items of information is greater than a preset frame rate;
the method further comprises: determining whether the communication delay of the target vehicle driving information is less than a preset delay threshold after determining the communication delay;
determining the vehicle speed at the current moment according to the speed and the acceleration after determining that the communication delay is less than the preset delay threshold, wherein the preset delay threshold is determined based on a real-time communication bandwidth.

9. A chassis image generation apparatus, wherein the apparatus comprises:
a receiving module (11), configured to receive target vehicle driving information, wherein the target vehicle driving information is obtained by aligning timestamps of items of information in vehicle driving information, and the timestamps are used to record acquisition times of the items of information;
an information determining module (12), configured to determine a speed, an acceleration, and a target timestamp from the target vehicle driving information, wherein the target timestamp is a timestamp of the speed and the acceleration;
a vehicle-speed determining module (13), configured to determine a vehicle speed at a current moment according to the speed and the acceleration, wherein the current moment is a future moment relative to the target timestamp; wherein, an algorithm formula for the vehicle speed at the current moment is: ${V}_{i 1} = \left({V}_{wLR 0}+{V}_{wR}\right) / 2 \pm \sqrt{\pm {a}_{lg 0}^{2} \pm {a}_{lat 0}^{2}} Δt ;$
wherein, Vᵢ₁ is the vehicle speed at the current moment, which is used as a speed input for generating a panoramic image;
*V*_{*wLR*0} is a wheel speed of a left rear wheel at the target timestamp;
*V*_{*wRR*0} is a wheel speed of a right rear wheel at the target timestamp;
*a*_{*lg*0} is a longitudinal acceleration at the target timestamp;
*a*_{*lat*0} is a lateral acceleration at the target timestamp;
*Δt* is a communication delay determined according to the target timestamp and the current moment; and
a panoramic-image generating module (14), configured to determine a filling image under a chassis of the vehicle according to the vehicle speed at the current moment and other information in the target vehicle driving information except the speed and the acceleration; and stitching the filling image to an environmental image of the vehicle at the current moment to determine the panoramic image of the vehicle at the current moment.

10. The chassis image generation apparatus according to claim 9, wherein in a case that the vehicle is driving on a flat surface, the speed comprises: the wheel speed of the left rear wheel and the wheel speed of the right rear wheel of the vehicle at the target timestamp; the acceleration comprises: the longitudinal acceleration and the lateral acceleration of the vehicle; and the vehicle-speed determining module (13) comprises:
a first communication-delay determining unit, configured to determine the communication delay according to the target timestamp and the current moment; and
a first vehicle-speed determining unit, configured to determine the vehicle speed at the current moment according to the wheel speed of the left rear wheel and the wheel speed of the right rear wheel at the target timestamp, the longitudinal acceleration and the lateral acceleration of the vehicle, and the communication delay.

11. The chassis image generation apparatus according to claim 10, wherein the other information comprises at least: images of the vehicle, a steering wheel angle, and vehicle body parameters; and the panoramic-image generating module (14) comprises:
a first determining unit, configured to determine the images of the vehicle, the steering wheel angle, and the vehicle body parameters from the target vehicle driving information; and
a first panoramic-image generating unit, configured to determine the panoramic image of the vehicle at the current moment according to the images of the vehicle, the steering wheel angle, the vehicle body parameters, and the vehicle speed at the current moment.

12. The chassis image generation apparatus according to claim 11, wherein the first panoramic-image generating unit comprises:
a filling-image determining unit, configured to determine a position and an attitude of the vehicle at the current moment, and a filling image under a chassis of the vehicle according to the images of the vehicle, the steering wheel angle, the vehicle body parameters and the vehicle speed at the current moment;
a filling unit, configured to stitch the filling image under the chassis of the vehicle into an environmental image of the vehicle at the current moment based on the position and the attitude of the vehicle at the current moment; and
a correcting unit, configured to correct a position and a size of the filling image fused into the environmental image to obtain the panoramic image.

13. The chassis image generation apparatus according to claim 9, wherein in a case that the vehicle is driving on a slope, the speed comprises: the wheel speed of the left rear wheel and the wheel speed of the right rear wheel of the vehicle at the target timestamp; the acceleration comprises: the longitudinal acceleration, the lateral acceleration and a vertical acceleration of the vehicle; and the vehicle-speed determining module (13) comprises:
a second communication-delay determining unit, configured to determine the communication delay according to the target timestamp and the current moment; and
a second vehicle-speed determining unit, configured to determine the vehicle speed at the current moment according to the wheel speed of the left rear wheel and the wheel speed of the right rear wheel at the target timestamp, the longitudinal acceleration, the lateral acceleration and the vertical acceleration of the vehicle, and the communication delay.

14. The chassis image generation apparatus according to claim 13, wherein the other information comprises at least: images of the vehicle, a steering wheel angle, vehicle body parameters and slope information; and the panoramic-image generating module (14) comprises:
a second determining unit, configured to determine the images of the vehicle, the steering wheel angle, the vehicle body parameters and the slope information from the target vehicle driving information; and
a second panoramic-image generating unit, configured to determine the panoramic image of the vehicle at the current moment according to the images of the vehicle, the steering wheel angle, the vehicle body parameters, the slope information, and the vehicle speed at the current moment.

15. An electronic device (700), comprising a memory (710), a processor (720) and a computer program stored on the memory (710), wherein the processor (720) executes the computer program to implement the chassis image generation method according to any one of claims 1 to 8.
